**Europäisches Patentamt**

**European Patent Office**

**Office européen des brevets**

(19)

(11) Veröffentlichungsnummer: **0 181 894**
**B1**

(12) **EUROPÄISCHE PATENTSCHRIFT**

(45) Veröffentlichungstag der Patentschrift:
**27.09.89**

(51) Int. Cl.⁴: **F 16 L 59/12,** F 24 F 13/02, E 04 F 13/08

(21) Anmeldenummer: **85902450.7**

(22) Anmeldetag: **09.05.85**

(86) Internationale Anmeldenummer:
**PCT/DE 85/00153**

(87) Internationale Veröffentlichungsnummer:
**WO 85/05165 (21.11.85 Gazette 85/25)**

(54) **ANORDNUNG ZUR BEFESTIGUNG VON FLACHEN ISOLIERSTOFFEN AUF DÜNNWANDIGEN UNTERGRÜNDEN, INSBESONDERE VON WÄRMEISOLIERMATTEN ODER -PAPPEN AUF DEM BLECH VON KLIMATISIERUNGSKANÄLEN.**

(30) Priorität: **09.05.84 DE 3417108**

(43) Veröffentlichungstag der Anmeldung:
**28.05.86 Patentblatt 86/22**

(45) Bekanntmachung des Hinweises auf die Patenterteilung:
**27.09.89 Patentblatt 89/39**

(84) Benannte Vertragsstaaten:
**AT BE CH DE FR GB IT LI LU NL SE**

(56) Entgegenhaltungen:
**FR-A- 2 363 671**

(73) Patentinhaber: **VEREINIGTE SCHRAUBENWERKE GMBH, Dahlhauser Strasse 106 Postfach 3640, D-4300 Essen 14 (DE)**

(72) Erfinder: **SCHUBERT, Rainer, Liebigstrasse 38, D-4620 Castrop-Rauxel (DE)**
Erfinder: **WEBER, Otto, Bahnhofstrasse 84, D-4620 Castrop-Rauxel (DE)**

(74) Vertreter: **Patentanwaltsbüro Cohausz & Florack, Schumannstrasse 97, D-4000 Düsseldorf 1 (DE)**

## Beschreibung

Die Erfindung bezieht sich auf ein Befestigungselement der im Oberbegriff des Anspruches 1 genannten Art.

Ein Haupteinsatzgebiet solcher Befestigungselemente ist die Befestigung von Isolierungen von Kanälen einer Klimaanlage. Solche Kanäle werden aus dünnwandigen Metallblechen, insbesondere verzinkten Stahlblechen, hergestellt, die sich leicht biegen lassen. Wegen der in den Kanälen zum Zwecke der Klimatisierung geführten Medien, insbesondere temperierter Luft, ist es zum Zwecke der Wärme- und Geräuschdämmung erforderlich, die häufig eine komplizierte Führung aufweisenden Kanäle mit einer Isolierung zu verkleiden. Als Isolierung werden beispielsweise Glasfasermatten eingesetzt, die auf einer Seite eine Aluminiumfolienkaschierung tragen. Nach Befestigen solcher Matten mittels der Befestigungselemente auf den Kanälen befindet sich die Aluminiumfolienkaschierung auf der Aussenseite.

Die Isolierung solcher und ähnlicher, dünnwandiger Untergründe muss dauerhaft sein, was besondere Anforderungen u.a. an den festen Sitz des Isolierstoffes auf dem Untergrund stellt. Das lässt sich in der Regel nur durch einen doppelten Formschluss erreichen, welcher einerseits den Isolierstoff auf dem Untergrund festhält und andererseits den Untergrund mit dem Isolierstoff verbindet. Ein solcher Formschluss verlangt eine mehrfache Perforierung des dünnwandigen Untergrundes und des Isolierstoffes. Die Perforation des Untergrundes ist bereits aus Gründen seiner Dünnwandigkeit problematisch, weil u.a. eine verhältnismässig geringe Beulsteifigkeit vorliegt und weil insbesondere bei den Kanälen der Klimaanlage ein Korrosionsschutz, z.B. eine Verzinkung vorliegt, deren Wirkungen nicht beeinträchtigt werden dürfen. Die Perforationen des Isolierstoffes sind als solche wegen seiner lockeren Masse im allgemeinen leicht zu bewerkstelligen, müssen aber eine vollflächige Auflage der Isolierung auf dem Untergrund zur Vermeidung von nicht isolierten Bereichen ermöglichen. Diesen Bedingungen genügen am besten angespitzte, dünne Stahlstifte, welche dementsprechend leicht den Isolierstoff durchdringen können und sich mit diesem formschlüssig über Klemmplatten verbinden lassen, welche auf einen aufgerauhten Teilbereich des Stiftes hinter der Stiftspitze aufgeklemmt werden.

Es ist bekannt, wegen der geschilderten Bedingungen, welche der dünnwandige Untergrund setzt, die Stifte mit einem klebenden Kopf zu versehen. Dann entfällt die Perforierung des dünnwandigen Untergrundes und die damit verbundene Beschädigung einer etwaigen Verzinkung, aber auch der Formschluss mit dem Untergrund. Der mit einer Verklebung erzielbare Kraftschluss reicht nicht immer aus. Die Verklebung hat aber den bislang nicht behebbaren Nachteil, dass sie mit den zur Verfügung stehenden Klebstoffen nicht dauerhaft genug ist, um die Lebensdauer einer Klimaanlage zu erreichen. Das macht eine solche Ausführungsform zwar nicht von vornherein unbrauchbar. Sie setzt aber ständige Überwachungen und Reparaturarbeiten voraus, was kostspielig und unpraktisch ist.

Ferner ist es bekannt, Isoliermaterial an einer Dachdeckungsunterlage aus Metall mittels einer Gewindeschraube zu befestigen, die auf der der Unterlage abgewandten Seite des Isoliermaterials mit ihrem Schraubenkopf eine grossflächige Unterlegscheibe hält, die ihrerseits das Isoliermaterial hält. Die Spitze des Schraubenschaftes ist als Bohrspitze ausgebildet und das Gewinde als selbstschneidendes Gewinde. Die Befestigung des Isoliermaterials an der Dachdeckungsunterlage mit einer solchen Schraube ist aufwendig, denn die Schraube muss bei auf der Unterlage aufliegendem Isoliermaterial in die Unterlage eingeschraubt werden. Diese Art der Montage von grossflächigen Isolierplatten ist nur dann möglich, wenn entweder die Isolierplatten auf dem Dach aufliegen und sich damit selbst tragen oder durch provisorische Haltemittel gehalten werden. Ferner ist es bei dieser Art von Befestigung von Isoliermaterial notwendig, dass die Schrauben einen verhältnismässig grossen Schaftquerschnitt haben und auch im gewindefreien Schaft den gleichen Querschnitt wie im Bereich des selbstschneidenden Gewindes haben, damit der Schaft auf der freien Länge durch das Isoliermaterial geführt werden kann. Ohne eine solche Führung und ohne verhältnismässig grossen Querschnitt ist es bei einem Kraftangriff am fernliegenden Schraubenkopf kaum möglich, die Schrauben exakt zu setzen und das erforderliche Drehmoment ohne Ausknicken oder Ausbiegen des Schaftes zur Bohrerspitze und zum Gewinde zu übertragen (DE-A 3 106 844).

Schliesslich ist es bekannt, ein nagelartiges Befestigungselement mittels einer auf einer dünnwandigen Unterlage aufgenieteten Lochplatte aufrechtstehend zu befestigen. Auf der der dünnwandigen Unterlage gegenüberliegenden Seite des Isolierkörpers ist auf dem Stift eine Klemmplatte gesteckt, die den Isolierkörper hält. Die Befestigung des nagelähnlichen Stiftes mittels der Lochplatte an der dünnwandigen Unterlage ist recht aufwendig (FR-A 2 363 671).

Der Erfindung liegt die Aufgabe zugrunde, ein Befestigungselement der im Oberbegriff des Anspruchs 1 genannten Art dahingehend zu verbessern, dass bei Beibehaltung der leichten Montage der Isolierkörper die Befestigungselemente einfach und dauerhaft befestigt werden können.

Die Aufgabe wird durch die Merkmale des Kennzeichens des Anspruchs 1 gelöst.

Bei dem erfindungsgemässen Befestigungselement bilden der Stift und die Schraube eine Baueinheit, die den Einsatz einer Bohrvorrichtung, beispielsweise einer Bohrmaschine, ermöglicht. Die Antriebskraft wird hierbei über die Schlüsselflächen des Schraubenkopfes übertragen, welcher durch die Ausbildung des Bundes einen grösseren Durchmesser als der Bolzen und der Stift besitzt. Dadurch ist eine günstige Einleitung der für das Bohren und Gewindeschneiden erforderlichen Kräfte über eine relativ geringe axiale Länge des Schraubenschaftes zu übertragen. Da der Schaft der Schraube eine Bohrerspitze aufweist, lässt sich auch auf glatten Flächen mit vergleichsweise geringen Druckkräften auskommen. Die sonst bei Blechen auftretenden Einbeulungen werden dadurch weitgehend vermieden. Auch ein Verlaufen beim Anbohren wird vermieden, so dass Korrosionsschutzschichten nicht beschädigt werden. Das selbstschneidende Gewinde bringt den weiteren Vorteil der Selbsthemmung des Schaftes in der Bohrung und den Vorteil der Abdichtung. Die Abdichtung kann allerdings weiter durch eine auf dem Schaft der Schraube und unter deren Kopf angeordnete Dichtungsscheibe verbessert werden. Wie bei den gattungsgleichen Befestigungselementen ist nach dem Anbringen der Befestigungselemente an der Unterlage die Montage der Isolierkörper sehr einfach, weil die Isolierkörper nur auf die verhältnismässig dünnen Stifte aufgesteckt und durch Aufstecken der Klemmplatten fixiert zu werden brauchen. Dieser Vorteil wirkt sich besonders bei komplizierten Formen, wie sie bei Kanälen von Klimaanlagen häufig auftreten, aus. Nach einer weiteren Ausgestaltung der Erfindung kann der Kopf der Schraube zum Stift hin sich konisch verjüngen. Diese Ausgestaltung hat den Vorteil, dass sich in axialer Richtung verhältnismässig lange Schlüsselflächen ausbilden lassen, durch den in den Isolierkörper eindringenden Kopf eine enge Anlage des Isolierkörpers an der Unterlage erreicht wird. Eine bevorzugte konische Verjüngung besteht in einem vierseitigen Pyramidenstumpf, dessen Mantelflächen die Schlüsselangriffsflächen bilden.

Für das Bohren und Einschrauben des Befestigungselementes in die Unterlage kann ein in mit einem Ende in das Bohrfutter einer Bohrmaschine einsetzbarer Schlüssel vorgesehen sein, der an seinem freien anderen Ende den äusseren Schlüsselangriffsflächen entsprechende innere Gegenflächen und eine von dem freien Ende ausgehende Aussparung zur Aufnahme des Stiftes bei auf den Kopf der Schraube aufgestecktem Schlüssel aufweist.

Im folgenden wird die Erfindung anhand einer ein Ausführungsbeispiel darstellenden Zeichnung näher erläutert. Im einzelnen zeigen:

Fig. 1 einen Querschnitt durch eine mit einer Isolierung verkleideten Wand eines Kanals einer Klimaanlage;

Fig. 2 ein Befestigungselement in axialer Ansicht von der Stiftseite aus; und

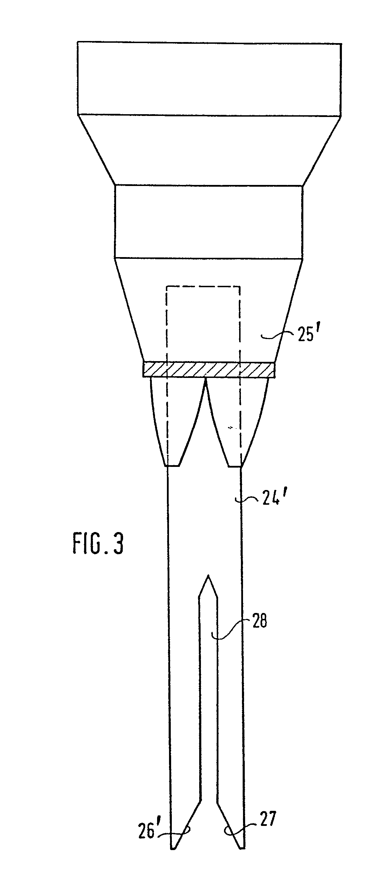

Fig. 3 einen Schlüssel für das Befestigungselement gemäss Fig. 2 in einem Bohrfutter einer Bohrmaschine in Seitenansicht.

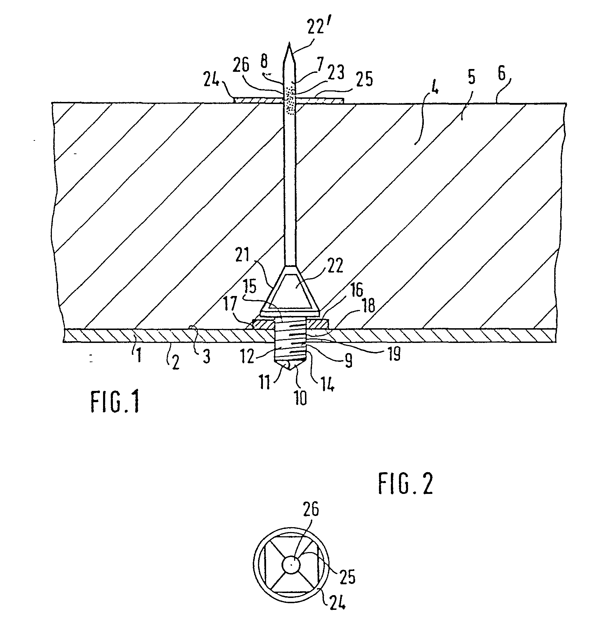

Die in Fig. 1 dargestellte Wand des Kanals einer Klimaanlage bildet eine dünnwandige Unterlage 1 aus Stahlblech, welches auf beiden Seiten 2, 3 verzinkt ist. Als Isolierung dient eine Glasfasermatte 4 mit einer Aluminiumfolienkaschierung 6. Die Befestigung dieses flächigen Isolierkörpers 4, 6 auf der dünnwandigen Unterlage 1 erfolgt an mehreren Stellen mittels Befestigungselementen. In Fig. 1 ist eine dieser Befestigungsstellen dargestellt.

Das Befestigungselement besteht aus einem Stahlstift 8 und einer aus einem Kopf 12 und einem Schaft 9 bestehenden Schraube. Der Stahlstift 8 und die Schraube 9, 12 bilden eine Baueinheit.

Das freie Ende des Schaftes 9 hat eine Bohrerspitze 10 mit Schneidkanten 11. Der Schaft 9 ist mit einem selbstschneidenden Gewinde 14 versehen, welches bis zu einem von der Unterseite des Schraubenkopfes 12 gebildeten Bund 15 reicht. Der Bund 15 dient zum Einspannen einer Dichtscheibe 16, welche auf einer Kreisringfläche 17 der Innenseite 3 der Unterlage 1 abdichtet, welche eine Bohrung 18 umgibt, in die mit dem selbstschneidenden Gewinde 14 ein Gewinde 19 eingeschnitten ist.

Der Bund 15 bildet das im Durchmesser grössere Ende des konisch ausgebildeten Kopfes 12 der Schraube. Der konische Kopf 12 ist mit vier jeweils um 90° versetzten Schlüsselangriffsflächen 22 versehen. Er hat also die Form eines vierseitigen Pyramidenstumpfes. Die Schlüsselangriffsflächen 22 dienen zur Übertragung der Drehmomente auf die Bohrerspitze 10 und auf den Schaft 9 mit dem selbstschneidenden Gewinde 14.

Der konische Schraubenkopf 22 geht in den zylindrischen Stahlstift 8 über, dessen Spitze 7 pyramidenförmig ausgebildet ist. Der sich an diese Spitze 7 unmittelbar anschliessende zylindrische Abschnitt ist mit einer Aufrauhung 23 versehen. Diese wirkt mit einer runden, federnden Klemmplatte 24 zusammen, welche vier um jeweils 90° gegeneinander versetzte Einschnitte 25 und im Kreuzungspunkt eine Aussparung 26 für den Stift 8 aufweist.

Um mit einer Bohrmaschine das Befestigungselement an einer Unterlage anbringen zu können, ist ein als Feder 29 ausgebildeter Schlüssel vorgesehen, der mit einem Ende in das nur teilweise dargestellte Bohrfutter 30 einer elektrischen Handbohrmaschine einsetzbar ist. Der Schlüssel weist an seinem freien Ende zu den äusseren Schlüsselangriffsflächen 22 passende innere Gegenflächen 27 auf, die eine konische Aussparung bilden. Von dieser Aussparung geht eine Aussparung 28 axial aus, die den Stahlstift 8 bei auf dem Kopf 12 der Schraube steckenden Schlüssel 29 ganz aufnimmt.

Die Befestigung des Isolierkörpers 4 auf der Unterlage 1 geschieht wie folgt.:

Zunächst werden die Befestigungselemente an der Unterlage 1 befestigt. Dazu wird die gesamte Baueinheit mit ihrem Stift 8 in die Aussparung 28 des Schlüssels 29 gesteckt, bis dass die Schlüsselangriffsflächen 22 und die Gegenflächen 27 formschlüssig aneinander liegen. Mit der Bohrerspitze 10 wird an der ausgewählten Stelle der Unterlage 1, wie mit Metallbohrern üblich, ein Loch gebohrt und anschliessend mit dem selbstschneidenden Gewinde 14 das Gewinde 19 geschnitten. Das Einschneiden und Anschrauben wird fortgesetzt, bis dass durch den Bund 15 die Dichtscheibe 16 auf der Aussenseite 3 der Unterlage 1 zur Anlage kommt und eingespannt ist.

Wie aus Fig. 1 ersichtlich, steht der Schaft 9 um ein bestimmtes Mass nach innen vor, er ist im übrigen aber über das selbstschneidende Gewinde 14 und das eingeschnittene Gewinde 19 mit der Unterlage 1 formschlüssig verbunden. Damit sitzt die Baueinheit fest. Über den Stift 8 wird dann der Isolierkörper 4 aufgeschoben, wobei die Spitze 7 zunächst die Glasfasermatte 5 mit der Folienkaschierung 6 durchdringt. Die Länge des Stiftes 8 ist so gewählt, dass mindestens ein Teilabschnitt der Aufrauhung 23 über die Kaschierung 6 nach aussen vorsteht. Dann wird die federnde Klemmplatte 24 aufgeschoben, welche durch Verformung der von den Ausschnitten gebildeten Lappen an der Aufrauhung 23 fixiert wird.

## Patentansprüche

1. Befestigungselement für einen auf einer dünnwandigen Unterlage (1), insbesondere auf dem Blech eines Kanals einer Klimaanlage befestigbaren, flachen Isolierkörper (4), insbesondere eine Wärmeisoliermatte oder -pappe, mit einem Stift (8), dessen eines Ende (7) zum Perforieren des Isolierkörpers (4) ausgebildet ist und dessen anderes Ende (12) ein Mittel (19) zum Befestigen an der Unterlage (1) aufweist, und einer auf dem Stift (8) festklemmbaren Klemmplatte (24) zum Halten des auf den Stift (8) aufsteckbaren Isolierkörpers (4), dadurch gekennzeichnet, dass das Mittel zum Befestigen eine Schraube (9, 12) ist, deren Schaft (9) ein selbstschneidendes Gewinde (14) und eine Bohrerspitze (10) aufweist und auf deren Schlüsselangriffsflächen (22) aufweisendem Kopf (12) der Stift (8) mit seinem anderen Ende fluchtend mit dem Schaft (9) sitzt.

2. Befestigungselement nach Anspruch 1, dadurch gekennzeichnet, dass auf dem Schaft (8) der Schraube (9, 12) und unter deren Kopf (12) eine Dichtungsscheibe (16) sitzt.

3. Befestigungselement nach Anspruch 1 oder 2, dadurch gekennzeichnet, dass der Kopf (12) der Schraube (9, 12) zum Stift (8) hin konsich verjüngt ist.

4. Befestigungselement nach Anspruch 3, dadurch gekennzeichnet, dass der Kopf (12) der Schraube als vierseitiger Pyramidenstumpf ausgebildet ist, dessen Mantelflächen (22) die Schlüsselangriffsflächen bilden.

## Claims

1. An attaching element for a flat insulating member (4), more particularly a heat insulating jacket or paperboard, which can be attached to a thin-walled support (1), more particularly the sheet metal of an air conditioning installation duct, having: a pin (8), one end (7) of which is constructed to perforate the insulating member (4), its other end (12) having a means (19) for attachment to the support (1): and a clamping plate (24) which can be clamped to the pin (8) for the retention of the insulating member (4), which can be fitted on to the pin (8), characterized in that the means of attachment is a screw (9, 12) whose shank (9) has a self-cutting screwthreading (1) and a drill tip (10) and on whose head (12), having spanner engagement faces (22), the pin (8) is disposed with its other end in alignment with the shank (9).

2. An attaching element according to claim 1, characterized in that a sealing disc (16) is disposed on the shank (8) of the screw (9, 12) below its head (10).

3. An attaching element according to claims 1 or 2, characterized in that the head (12) of the screw (9, 12) tapers conically in the direction of the pin (8).

4. An attaching element according to claim 3, characterized in that the head (12) of the screw is constructed in the form of a four-sided frustrum, whose generated surfaces (22) form the spanner engagement faces.

## Revendications

1. Elément de fixation pour un corps isolant plat (4), en particulier une natte ou un carton d'isolation thermique, pouvant être fixé sur un support à paroi mince (1), en particulier sur la tôle d'un canal d'un climatiseur, avec une cheville (8) dont une des extrémités (7) est conformée pour perforer le corps isolant (4) et dont l'autre extrémité (12) présente un moyen (19) de fixation au support (1) et une plaque de serrage (24) pouvant être serrée à bloc sur la cheville (8) pour maintenir le corps isolant (4) pouvant être monté sur la cheville (8), caractérisé en ce que le moyen de fixation est une vis (9, 12) dont la tige (9) présente un filetage autoforeur (14) et une mèche (10), et sur la tête (12), qui présente des surfaces d'entailles de clé (22), de laquelle s'appuie la cheville (8) avec son autre extrémité alignée avec la tige (9).

2. Elément de fixation selon la revendication 1, caractérisé en ce qu'une bague d'étanchéité (16) est logée sur la tige (8) de la vis (9, 12) et sous sa tête (12).

3. Elément de fixation selon la revendication 1 ou 2, caractérisé en ce que la tête (12) de la vis (9, 12) est rétrécie coniquement en direction de la cheville (8).

4. Elément de fixation selon la revendication 3, caractérisé en ce que la tête (12) de la vis est conformée en tronc de pyramide à quatre côtés dont les surfaces d'enveloppe (22) forment les surfaces d'entailles de clé.

FIG.1

FIG.2

FIG.3